# EUROPEAN PATENT APPLICATION

(11) **EP 4 277 335 A1**
(43) Date of publication of application: **15.11.2023**
(21) Application number: 22736633.3
(22) Date of filing: 11.01.2022
(51) Int. Cl.: H04W 24/08

(54) **BEAM QUALITY MEASUREMENT METHOD AND DEVICE**

(30) Priority: 11.01.2021 CN 202110034373
(71) Applicant: Vivo Mobile Communication Co., Ltd., Dongguan, Guangdong 523863 (CN)
(72) Inventor: YANG, Kun, Dongguan, Guangdong 523863 (CN); JIANG, Dajie, Dongguan, Guangdong 523863 (CN); QIN, Fei, Dongguan, Guangdong 523863 (CN)
(74) Representative: Murgitroyd & Company
(86) International application number: PCT/CN2022/071286
(87) International publication number: WO 2022/148472

(57) **Abstract**

Embodiments of this application disclose a beam quality measurement method and devices. The method includes: receiving, by a terminal, reference signals forwarded by wireless auxiliary device, where the reference signals are transmitted by a network device and are separately forwarded by the wireless auxiliary device at different moments through a plurality of beams; and performing joint processing on reference signals of a same beam of the network device and of a same beam of the wireless auxiliary device to obtain a processing result, where the joint processing includes layer 1 filtering and/or layer 3 filtering.

## Description

### CROSS-REFERENCE TO RELATED APPLICATION

The present invention claims priority to Chinese Patent Application No. 202110034373.0, filed with the China National Intellectual Property Administration on January 11, 2021 and entitled "BEAM QUALITY MEASUREMENT METHOD AND DEVICES", which is incorporated herein by reference in its entirety.

### TECHNICAL FIELD

This application pertains to the field of communications technologies, and specifically relates to a beam quality measurement method and devices. The devices may include a beam quality measurement apparatus, a terminal, a network device, a wireless auxiliary device, and the like.

### BACKGROUND

Shielding in coverage of a cell usually causes a coverage hole, and a wireless signal has relatively weak strength in an area of the coverage hole, affecting communication quality. This phenomenon is more common on a high frequency band/millimeter band. To improve communication quality, some wireless auxiliary devices (for example, an intelligent surface) are generally introduced in the related art. These wireless auxiliary devices provide a communication service in the area of the coverage hole by forwarding a signal of a base station. Through proper deployment, the wireless auxiliary device can ensure better signal coverage.

A terminal may distinguish between a reference signal and a transmit beam by using a port number or an identifier (ID) of a reference signal (Reference Signal, RS). The wireless auxiliary device affects the reference signal, but the terminal cannot detect it. In this case, if the terminal performs beam quality measurement by using the reference signal affected by the wireless auxiliary device, an accurate measurement result cannot be obtained.

### SUMMARY

Embodiments of this application provide a beam quality measurement method and devices, to resolve a problem that accuracy of a measurement result of beam quality measurement performed by a terminal on a wireless auxiliary device is low.

According to a first aspect, a beam quality measurement method is provided. The method includes: receiving, by a terminal, reference signals forwarded by a wireless auxiliary device, where the reference signals are transmitted by a network device and are separately forwarded by the wireless auxiliary device at different moments through a plurality of beams; and performing joint processing on reference signals of a same beam of the network device and of a same beam of the wireless auxiliary device to obtain a processing result, where the joint processing includes layer 1 filtering and/or layer 3 filtering.

According to a second aspect, a beam quality measurement method is provided. The method includes: sending, by a network device, a reference signal, where the reference signal is separately forwarded by a wireless auxiliary device at different moments through a plurality of beams; and the reference signal is used by a terminal to perform joint processing on reference signals of a same beam of the network device and of a same beam of the wireless auxiliary device to obtain a processing result, where the joint processing includes layer 1 filtering and/or layer 3 filtering.

According to a third aspect, a beam quality measurement method is provided. The method includes: sending, by a network device, configuration information, where the configuration information is used to configure a wireless auxiliary device to forward a reference signal through a same beam within one time window, and the time window is used by a terminal to measure the reference signal.

According to a fourth aspect, a beam quality measurement method is provided. The method includes: receiving, by a wireless auxiliary device, configuration information, where the configuration information is used to configure the wireless auxiliary device to forward a reference signal through a same beam within one time window, and the time window is used by a terminal to measure the reference signal; and forwarding the reference signal according to the configuration information.

According to a fifth aspect, a beam quality measurement apparatus is provided, including: a receiving module, configured to receive reference signals forwarded by a wireless auxiliary device, where the reference signals are transmitted by a network device and are separately forwarded by the wireless auxiliary device at different moments through a plurality of beams; and a processing module, configured to perform joint processing on reference signals of a same beam of the network device and of a same beam of the wireless auxiliary device to obtain a processing result, where the joint processing includes layer 1 filtering and/or layer 3 filtering.

According to a sixth aspect, a beam quality measurement apparatus is provided, including a sending module, configured to a send reference signal, where the reference signal is separately forwarded by a wireless auxiliary device at different moments through a plurality of beams; and the reference signal is used by a terminal to perform joint processing on reference signals of a same beam of the beam quality measurement apparatus and of a same beam of the wireless auxiliary device to obtain a processing result, where the joint processing includes layer 1 filtering and/or layer 3 filtering.

According to a seventh aspect, a beam quality measurement apparatus is provided, including: a sending module, configured to send configuration information, where the configuration information is used to configure a wireless auxiliary device to forward a reference signal through a same beam within one time window, and the time window is used by a terminal to measure the reference signal.

According to an eighth aspect, a beam quality measurement apparatus is provided, including: a receiving module, configured to receive configuration information, where the configuration information is used to configure the beam quality measurement apparatus to forward a reference signal through a same beam within one time window, and the time window is used by a terminal to measure the reference signal; and a sending module, configured to forward the reference signal according to the configuration information.

According to a ninth aspect, a terminal is provided. The terminal includes a processor, a memory, and a program or an instruction stored in the memory and executable on the processor, where when the program or the instruction is executed by the processor, the method in the first aspect is implemented.

According to a tenth aspect, a network device is provided. The network device includes a processor, a memory, and a program or an instruction stored in the memory and executable on the processor, where when the program or the instruction is executed by the processor, the method in the second aspect or the third aspect is implemented.

According to an eleventh aspect, a wireless auxiliary device is provided. The wireless auxiliary device includes a processor, a memory, and a program or an instruction stored in the memory and executable on the processor, where when the program or the instruction is executed by the processor, the method in the fourth aspect is implemented.

According to a twelfth aspect, a readable storage medium is provided. The readable storage medium stores a program or an instruction, and when the program or the instruction is executed by a processor, the method in any one of the first aspect to the fourth aspect is implemented.

According to a thirteenth aspect, a computer program product is provided. The computer program product includes a processor, a memory, and a program or an instruction stored in the memory and executable on the processor, where when the program or the instruction is executed by the processor, the method in any one of the first aspect to the fourth aspect is implemented.

According to a fourteenth aspect, a chip is provided. The chip includes a processor and a communication interface, the communication interface is coupled to the processor, and the processor is configured to execute a program or an instruction to implement the method in any one of the first aspect to the fourth aspect.

In the embodiments of this application, a terminal receives reference signals forwarded by a wireless auxiliary device, and performs joint processing on reference signals of a same beam of a network device and of a same beam of the wireless auxiliary device to obtain a processing result, to avoid a problem that beam quality measurement accuracy is low because the terminal performs joint processing on reference signals of different beams of the wireless auxiliary device or performs joint processing on reference signals of different beams of the network device, thereby improving beam quality measurement accuracy.

### BRIEF DESCRIPTION OF DRAWINGS

FIG. 1 is a schematic diagram of a wireless communication system according to an embodiment of this application;
FIG. 2 is a schematic flowchart of a beam quality measurement method according to an embodiment of this application;
FIG. 3 is a schematic diagram of an application scene of a beam quality measurement method according to an embodiment of this application;
FIG. 4 is a schematic diagram of specific application of a beam quality measurement method according to an embodiment of this application;
FIG. 5 is a schematic diagram of specific application of a beam quality measurement method according to an embodiment of this application;
FIG. 6 is a schematic flowchart of a beam quality measurement method according to an embodiment of this application;
FIG. 7 is a schematic flowchart of a beam quality measurement method according to an embodiment of this application;
FIG. 8 is a schematic flowchart of a beam quality measurement method according to an embodiment of this application;
FIG. 9 is a schematic structural diagram of a beam quality measurement apparatus according to an embodiment of this application;
FIG. 10 is a schematic structural diagram of a beam quality measurement apparatus according to an embodiment of this application;
FIG. 11 is a schematic structural diagram of a beam quality measurement apparatus according to an embodiment of this application;
FIG. 12 is a schematic structural diagram of a beam quality measurement apparatus according to an embodiment of this application;
FIG. 13 is a schematic structural diagram of a communication device according to an embodiment of this application;
FIG. 14 is a schematic structural diagram of a terminal according to an embodiment of this application; and
FIG. 15 is a schematic structural diagram of a network device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first", "second", and the like are intended to distinguish between similar objects but do not describe a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6^{th} generation (6th Generation, 6G) communications system.

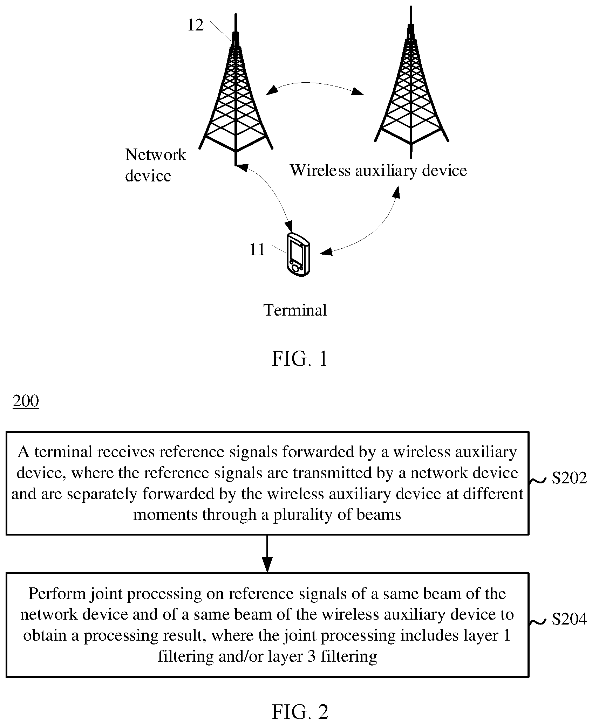

FIG. 1 is a schematic diagram of a wireless communications system to which embodiments of this application can be applied. The wireless communications system includes a terminal 11 and a network device 12. The terminal 11 may also be referred to as a terminal device or user equipment (User Equipment, UE). The terminal 11 may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (VUE), or pedestrian user equipment (PUE). The wearable device includes a bracelet, a headset, glasses, and the like. It should be noted that a specific type of the terminal 11 is not limited in the embodiments of this application. The network device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (evolution Node-B, eNB), a next generation NodeB (generation Node-B, gNB), a home NodeB, a home evolved NodeB, a WLAN access point (Wireless Local Area Networks, WLAN), a Wi-Fi (Wireless-Fidelity, WiFi) node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

With reference to the accompanying drawings, a beam quality measurement method and devices provided in the embodiments of this application are described in detail by using specific embodiments and application scenes.

As shown in FIG. 2, an embodiment of this application provides a beam quality measurement method 200. The method may be performed by a terminal. In other words, the method may be performed by software or hardware installed in the terminal. The method includes the following steps.

S202. A terminal receives reference signals forwarded by a wireless auxiliary device, where the reference signals are transmitted by a network device and are separately forwarded by the wireless auxiliary device at different moments through a plurality of beams.

S204. Perform joint processing on reference signals of a same beam of the network device and of a same beam of the wireless auxiliary device to obtain a processing result, where the joint processing includes layer 1 filtering and/or layer 3 filtering.

The reference signal in the embodiments of this application may be used by the terminal to measure a beam of the wireless auxiliary device, and the reference signal may be a downlink reference signal such as a synchronization signal and physical broadcast block (Synchronization Signal and PBCH Block, SSB), or a channel state information-reference signal (Channel State Information-Reference Signal, CSI-RS).

The wireless auxiliary device in the embodiments of this application may be a large intelligent surface (Large Intelligent Surfaces, LIS), a relay device, a backscatter (backscatter), a satellite, or the like.

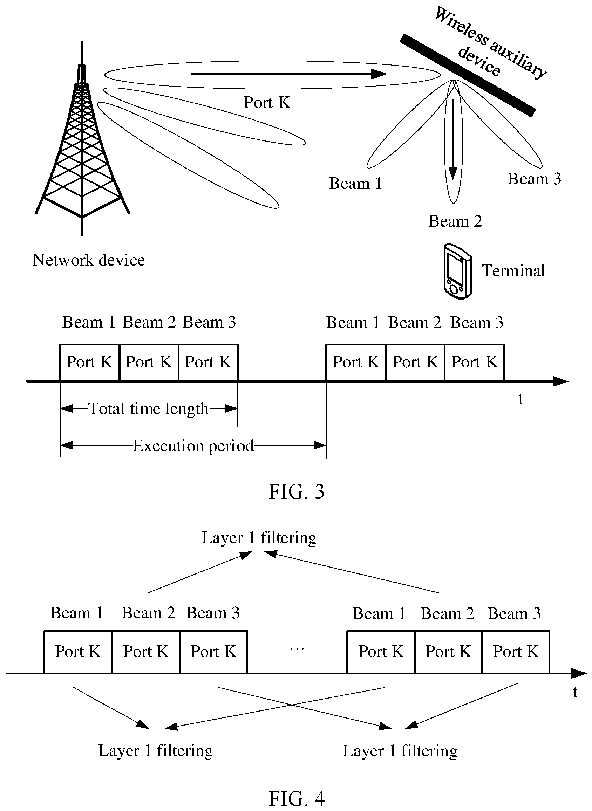

As shown in FIG. 3, FIG. 3 is a schematic diagram of an application scene of a beam quality measurement method according to an embodiment of this application. In this embodiment, a network device may send a reference signal to a wireless auxiliary device through one or more beams. The wireless auxiliary device may receive the reference signal, and separately forward the reference signal at different moments through a plurality of different beams.

In the embodiment shown in FIG. 3, specifically, the network device sends the reference signal to the wireless auxiliary device, and the wireless auxiliary device separately forwards the reference signal at different moments through three different beams. Because a relative position and a channel condition between the network device and the wireless auxiliary device remain quasi-static, the reference signal has a consistent signal identifier and/or a consistent port (for example, a port K in FIG. 3) in the network device, that is, a sending parameter of the network device remains unchanged. Because the wireless auxiliary device does not change sequence information/baseband information of the reference signal, a terminal generally cannot distinguish between reference signals of a same identifier on different beams. It can be understood that if the terminal measures the reference signals of a same identifier on different beams, an obtained measurement result cannot accurately reflect channel situations of a plurality of beams of the wireless auxiliary device.

In this embodiment, the terminal may perform joint processing on reference signals of a same beam of the network device and of a same beam of the wireless auxiliary device to obtain a processing result.

As shown in FIG. 4, FIG. 4 is a schematic diagram of a reference signal in a forwarding period of a wireless auxiliary device with three forwarding beams (or forwarding beams are referred to as beams for short). In this example, a terminal may perform layer 1 filtering joint processing on a reference signal of a beam 1, the terminal may perform layer 1 filtering joint processing on a reference signal of a beam 2, and the terminal may perform layer 1 filtering joint processing on a reference signal of a beam 3.

In this embodiment, the terminal may perform joint processing on reference signals of a same identifier or a same port number. The reference signals of a same identifier or a same port number may be sent by a network device to the wireless auxiliary device through a same (or the same) beam.

In addition, to implement joint processing performed by the terminal on reference signals of a same beam of the wireless auxiliary device, in an example, the terminal may determine the reference signals of the same beam based on a beam execution period of the wireless auxiliary device. For example, if the beam execution period of the wireless auxiliary device is T, reference signals received by the terminal at a moment t1 and a moment (t1+T) are generally from the same of the wireless auxiliary device. In another example, the network device may configure the wireless auxiliary device, so that a plurality of reference signals within one time window W are forwarded by the same beam of the wireless auxiliary device. The time window is used by the terminal to measure a reference signal, and the time window W is less than or equal to a beam execution time and is greater than or equal to a period P of the to-be-measured reference signal.

The joint processing in this embodiment may include layer 1 filtering, layer 3 filtering, or layer 1 filtering and layer 3 filtering. For example, the terminal inputs a result of layer 1 filtering into a corresponding layer 3 filter to perform layer 3 filtering.

Optionally, the processing result in this embodiment includes beam information of a plurality of beams of the wireless auxiliary device. This embodiment may further include the following step: reporting, by the terminal, the beam information to the network device, where the beam information includes identifiers of a plurality of strongest beams. In this way, the network device further performs beam indication on the terminal based on the identifiers of the strongest beams, so that the terminal can communicate with the wireless auxiliary device through the strongest beams, thereby improving communication quality.

According to the beam quality measurement method provided in this embodiment of this application, a terminal receives reference signals forwarded by a wireless auxiliary device, and performs joint processing on reference signals of a same beam of a network device and of a same beam of the wireless auxiliary device to obtain a processing result, to avoid a problem that beam quality measurement accuracy is low because the terminal performs joint processing on reference signals of different beams of the wireless auxiliary device or performs joint processing on reference signals of different beams of the network device, thereby improving beam quality measurement accuracy.

Optionally, before S202 of method 200, the terminal may further receive configuration information of the reference signal, where the configuration information may be sent by the network device, and the configuration information may include at least one of the following (1) to (4).
(1) An identifier or a port number of the reference signal. For example, the network device configures, for the terminal, an identifier or a port number of a reference signal that the terminal needs to measure.
(2) A time-frequency resource parameter of the reference signal, for example, including a time domain resource of a to-be-measured reference signal, a frequency domain resource of a to-be-measured reference signal, and a sending period of a to-be-measured reference signal.
(3) A time configuration parameter used to perform reference signal measurement behavior, where the time configuration parameter includes: a start time and an end time of a time window of measurement behavior, or a time length of a time window of measurement behavior, a measurement period, and a minimum time interval between measurement behaviors on two adjacent reference signals.
   The terminal may obtain, according to the time configuration parameter, a time domain location of a time window in which reference signal measurement needs to be performed.
(4) A joint processing criterion of the reference signal, where the joint processing criterion includes a measurement result processing method based on layer 1 filtering and a measurement result processing method based on layer 3 filtering. The terminal may perform a joint processing operation on the reference signal in S204 based on the joint processing criterion.

In an example, the configuration information received by the terminal may be used to configure all of the above four. In another example, if the configuration information is not used to configure a part or all of the above four, the terminal may obtain an unconfigured part of the above four through another means. For example, if the configuration information is not used to configure the joint processing criterion in the above (4), the terminal may obtain the joint processing criterion of the reference signal based on a protocol agreement.

As shown above, the joint processing in S204 of Embodiment 200 includes layer 1 filtering and/or layer 3 filtering. The following separately describes a joint processing process of layer 1 filtering and a joint processing process of layer 3 filtering by using solution 1 and solution 2.

### Solution 1

The joint processing in S204 of Embodiment 200 includes layer 1 filtering, and the configuration information in the foregoing embodiment may further include at least one of the following (1) to (4).
(1) A quantity of beams of the wireless auxiliary device. For example, in the example shown in FIG. 3, the quantity of beams of the wireless auxiliary device is 3.
(2) A total execution time length and an execution period of a beam of the wireless auxiliary device, where the execution period is less than a time length of a time window of measurement behavior.

For the total execution time length of the beam, refer to a total time length occupied on a time axis in FIG. 3. For the execution period, refer to FIG. 3. FIG. 3 schematically shows two execution periods.

In this example, the execution period is less than the time length of the time window of the measurement behavior. For example, the time length of the time window of the measurement behavior is equal to two, three, four, or more execution periods. Optionally, through a protocol predefinition, when the time window of the measurement behavior includes a plurality of execution periods of the wireless auxiliary device, a layer 1 filter is configured by default.

(3) A quantity of to-be-measured beams of the wireless auxiliary device and a beam execution time of the to-be-measured beam. For example, in the example shown in FIG. 4, the quantity of to-be-measured beams is 3, which are specifically a beam 1, a beam 2, and a beam 3. The configuration information is further used to configure beam execution times of the foregoing three beams. In the example shown in FIG. 4, a length of a beam execution time of each beam is a length occupied by one grid on a time axis.

(4) A beam selection rule of the wireless auxiliary device, where the beam selection rule includes: selecting Y strongest beams from a plurality of measured beams for layer 1 filtering or selecting Y best measurement results after layer 1 filtering and reporting the Y best measurement results to an upper layer, where Y is a positive integer.

The Y strongest beams or the Y best measurement results herein may be measured based on the following indexes of reference signals corresponding to the beams: reference signal received power (Reference Signal Receiving Power, RSRP), reference signal received quality (Reference Signal Receiving Quality, RSRQ), a received signal strength indicator (Received Signal Strength Indicator, RSSI), and the like.

In solution 1, the terminal may obtain the reference signals of the same beam based on the beam execution period of the wireless auxiliary device. For example, if the beam execution period of the wireless auxiliary device is T, reference signals received by the terminal at a moment t1 and a moment (tl+T) are generally from the same beam of the wireless auxiliary device. Specifically, for example, in solution 1, a time interval between two adjacent reference signals used for layer 1 filtering is a fixed value, and is equal to the beam execution period T of the wireless auxiliary device. For example, if a length of a time window used for reference signal measurement is nT, n reference signals in the time window correspond to the same beam of the wireless auxiliary device. That is, several measurement results that meet a layer 1 filtering requirement may be selected from the foregoing n reference signals and input into the layer 1 filter.

In solution 1, the performing, by the terminal, joint processing on reference signals of a same beam of the network device and of a same beam of the wireless auxiliary device to obtain a processing result may include: inputting, by the terminal, measurement results of the reference signals of the same beam of the network device and of the same beam of the wireless auxiliary device into a layer 1 filter according to the configuration information to obtain the processing result.

In solution 1, the terminal may further determine times N of parallel layer 1 filtering corresponding to the reference signal according to the quantity of beams of the wireless auxiliary device or the quantity of to-be-measured beams of the wireless auxiliary device. For example, the quantity of beams of the wireless auxiliary device is equal to the times N of parallel layer 1 filtering corresponding to the reference signal, or the quantity of to-be-measured beams of the wireless auxiliary device is equal to the times N of parallel layer 1 filtering corresponding to the reference signal. The quantity of beams of the wireless auxiliary device or the quantity of to-be-measured beams of the wireless auxiliary device may be configured by using the foregoing configuration information.

In solution 1, the terminal may further select Y results from N parallel layer 1 filtering results according to the beam selection rule and reporting the Y results to the upper layer. The beam selection rule may be configured by using the foregoing configuration information, and the Y measurement results may be one or more best results selected from all measurement results of the terminal.

In solution 1, a physical layer of the terminal may further measure correlation between reference signals of different beams of the wireless auxiliary device, and perform at least one of the following: reporting a correlation measurement result to the upper layer; and selecting, according to the correlation measurement result, whether to combine measurement results of the reference signals of the different beams of the wireless auxiliary device and report a combined result to the upper layer.

### Solution 2

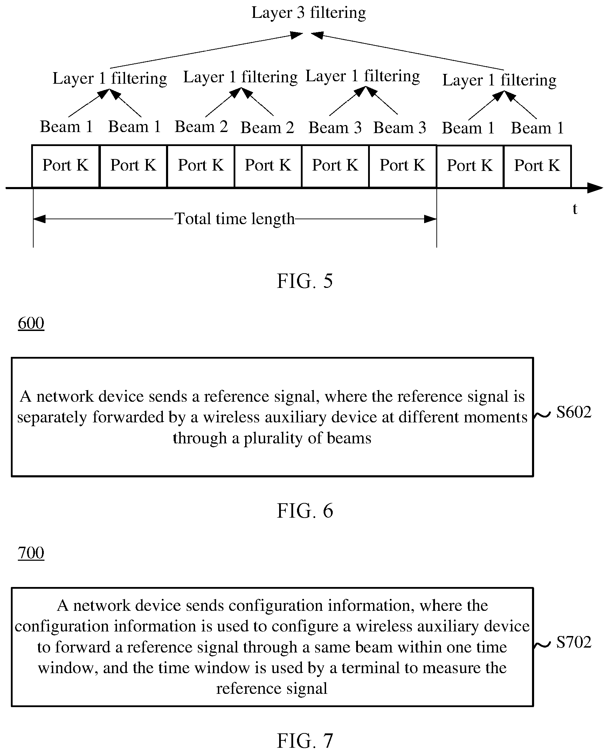

The joint processing in S204 of method 200 includes layer 3 filtering, and the configuration information in the foregoing embodiment of solution 1 may further include at least one of the following (1) to (3).
(1) A quantity of beams of the wireless auxiliary device. For example, in the example shown in FIG. 5, the quantity of beams of the wireless auxiliary device is 3.
(2) A total execution time length and an execution period of a beam of the wireless auxiliary device, where the execution period is greater than a time length of a time window of measurement behavior.
   For the total execution time length of the beam, refer to a total time length occupied on a time axis in FIG. 5. In the example shown in FIG. 5, the total execution time length of the beam is equal to a length of the execution period.
(3) A quantity of to-be-measured beams of the wireless auxiliary device and a beam execution time of the to-be-measured beam. For example, in the example shown in FIG. 5, the quantity of to-be-measured beams is 3, which are specifically a beam 1, a beam 2, and a beam 3. The configuration information is further used to configure beam execution times of the foregoing three beams.

In this example, an execution period of each beam is greater than the time length of the time window of the measurement behavior. For example, the time length of the time window of the measurement behavior is less than or equal to the total time length shown in FIG. 5. Optionally, through a protocol predefinition, when the time window of the measurement behavior is less than the total execution time length of the beam, a layer 3 filter is configured by default.

Optionally, the terminal may further determine times N of parallel layer 3 filtering corresponding to the reference signal according to the quantity of beams of the wireless auxiliary device or the quantity of to-be-measured beams of the wireless auxiliary device. For example, the quantity of beams of the wireless auxiliary device is equal to the times N of parallel layer 3 filtering corresponding to the reference signal, or the quantity of to-be-measured beams of the wireless auxiliary device is equal to the times N of parallel layer 3 filtering corresponding to the reference signal. The quantity of beams of the wireless auxiliary device or the quantity of to-be-measured beams of the wireless auxiliary device may be configured by using the foregoing configuration information.

In solution 2, the network device may further configure the wireless auxiliary device, so that the reference signals forwarded by the wireless auxiliary device meet at least one of the following (1) and (2).
(1) Reference signals within one time window are forwarded by the same beam of the wireless auxiliary device. The time window may be configured by the network device and used by the terminal to perform reference signal measurement. For details, refer to the time window of the measurement behavior described in the foregoing configuration information.
   In this example, within one time window, the network device sends a plurality of to-be-measured reference signals, and the wireless auxiliary device forwards the to-be-measured reference signals through a same beam within one time window.
(2) Beams of the wireless auxiliary device that are corresponding to time windows with different configuration are different.

The time windows with different configuration in this example may be time windows that are configured by the network device for the terminal and that are separately used to measure different beams of the wireless auxiliary device.

The performing joint processing on reference signals of a same beam of the network device and of a same beam of the wireless auxiliary device to obtain a processing result in solution 2 includes: inputting an output result of a layer 1 filter into a corresponding layer 3 filter according to the configuration information to obtain the processing result.

Optionally, in an example, the layer 1 filter and the layer 3 filter are in a one-to-one correspondence, and one layer 1 filter corresponds to one forwarding beam of the wireless auxiliary device.

Alternatively, optionally, the layer 1 filter is a filter with no aftereffect, that is, a filtering result of a current time window is not affected by a measurement result of a previous time window. The layer 1 filter and the layer 3 filter are in a one-to-many correspondence. The output result of the layer 1 filter is input into the corresponding layer 3 filter according to a correspondence of the wireless auxiliary device.

The following describes in detail the beam quality measurement method provided in the embodiments of this application with reference to two specific embodiments.

### Embodiment 1

Embodiment 1 corresponds to the foregoing solution 1.

In this embodiment, if beams that the terminal needs to measure are a plurality of beams forwarded by the wireless auxiliary device, and a plurality of reference signals that may be used for measurement are included in a time period of a forwarding beam of the wireless auxiliary device (for example, the reference signals are of a same RS configuration (for example, periodic RSs), but RSs at different times correspond to different beams of the wireless auxiliary device), the network device (a base station) configures a layer 1 filter (L1 filter) parameter for the terminal to be used for a filtering rule of the terminal, so that the terminal performs filtering on a measurement result of a same beam. The filtering rule may include a time interval of the same beam, a filtering rule of a plurality of beams, cooperative reporting of measurement auxiliary information, and the like.

Before this embodiment, the base station may learn of basic information of the wireless auxiliary device through an interface between the base station and the wireless auxiliary device, for example, including a forwarding beam of the wireless auxiliary device, an execution time length and an execution period of each forwarding beam, and a transmit beam from the base station to the wireless auxiliary device. In this embodiment, it is assumed that time synchronization/frame synchronization is ensured between the wireless auxiliary device and the base station.

This embodiment may include the following steps:
Step 1: The base station configures a to-be-measured base station beam set for the terminal, and indicates an additional measurement criterion. For details, refer to the descriptions of the configuration information in the foregoing solution 1. Step 1 may be implemented by using the following method 1 or method 2.

Method 1: In an explicit indication method, the base station explicitly indicates measurement and filtering behavior of the terminal.

For example, the base station specifies an additional measurement criterion to be followed by reference signals corresponding to one or more base station beams.

The additional measurement criterion may include a measurement requirement of input information for layer 1 filtering, and a time interval between two adjacent reference signals used for filtering is a fixed value and equal to the beam execution period T of the wireless auxiliary device. When configuring a measurement time window of a reference signal, the base station considers the cyclic beam execution period T of the wireless auxiliary device. When the input information required for layer 1 filtering is at least n measurement results, a length of the measurement time window should not be less than nT.

In this example, the terminal determines a quantity requirement of input data for layer 1 filtering according to the configured time window and the time interval between the two adjacent reference signals. For example, the length of the time window is divided by the time interval between the two adjacent reference signals.

Method 2: In an implicit method, UE determines measurement and filtering behavior of the UE according to configuration information 1 (a forwarding beam of the wireless auxiliary device and an execution time length and a period of each forwarding beam) and configuration information 2 (a configuration of a to-be-measured reference signal, including at least a time domain resource in which the reference signal is located) that are sent by the base station.

For example, the UE determines the measurement and filtering behavior of the UE according to the configuration information 1, the configuration information 2, and a first rule defined in the protocol. The first rule is that layer 1 filtering can only be performed on reference signals at a same forwarding beam moment of the wireless auxiliary device, or forwarding beams, of the wireless auxiliary device, corresponding to a plurality of moments at which layer 1 filtering is performed need to be the same.

Optionally, an interval and a quantity of the plurality of moments for layer 1 filtering may be configured by the base station, defined in the protocol, or implemented by the UE.

The additional measurement criterion may include times of parallel layer 1 filtering on reference signals of a same port or a same ID. It can be understood that, within one time window, a to-be-measured reference signal is transmitted a plurality of times, and is forwarded by the wireless auxiliary device through a plurality of different forwarding beams. The times of parallel layer 1 filtering indicates a quantity of different to-be-measured beams.

The additional measurement criterion may include a multi-beam selection rule. One selection rule is that the terminal selects Y strongest beams from a plurality of measurable beams for layer 1 filtering or selects Y best results after layer 1 filtering and reports the Y best results to an upper layer. Another selection rule is that the base station configures a to-be-measured beam for the terminal, for example, indicates a position of the to-be-measured beam that appears for the first time in the measurement time window (a time offset from a window start boundary).

Optionally, a quantity of beams measured by the terminal is determined according to a quantity of required layer 1 filters. For example, the quantity of to-be-measured beams is equal to the quantity of layer 1 filters.

Step 2: The terminal measures a reference signal according to the foregoing configuration by the base station, and reports a layer 1 filtering result to an upper layer.

Optionally, the terminal may further receive reference signals of a plurality of beams of the wireless auxiliary device, and measure correlation between reference signals of different beams. The terminal selects, according to a correlation measurement result, whether to combine measurement results of reference signals of two or more beams and report a combined result to the upper layer.

Optionally, the terminal may report the signal correlation measurement result.

Step 3: After layer 3 filtering, the terminal selects several strongest beams and reports the several strongest beams to the base station.

If the reported beams include a forwarding beam of the wireless auxiliary device, the terminal separately indicates that a beam ID in the reported information corresponds to a number of a plurality of parallel layer 1 filters in step 1.

Optionally, through the protocol specification or the configuration by the base station, the terminal selects N1 strongest beams from commonly configured measurement results and selects N2 strongest beams from additionally configured measurement results, and separately reports the N1 strongest beams and the N2 strongest beams to the base station.

Optionally, the terminal reports the signal correlation measurement result to the base station, to assist the base station in scheduling.

### Embodiment 2

Embodiment 2 corresponds to the foregoing solution 2.

In this embodiment, the base station configures the wireless auxiliary device to ensure that all to-be-measured reference signals appearing within one time window are forwarded by a same beam of the wireless auxiliary device, and time windows with different configuration correspond to different beams of the wireless auxiliary device. The base station implements a beam measurement function of the wireless auxiliary device by configuring a parameter of a layer 3 filter for the terminal.

This embodiment may include the following steps:
Step 1: The base station configures a parameter of a layer 3 filter for the terminal.

An additional layer 3 filtering configuration includes a quantity of parallel layer 3 filters for a same piece of layer 1 filtering input information, and the quantity corresponds to a quantity of to-be-measured beams of the wireless auxiliary device.

The base station configures a beam execution time for the wireless auxiliary device, to ensure that the wireless auxiliary device uses a corresponding forwarding beam in a slot in which the to-be-measured reference signal is located or a symbol time near the slot. The configuration may be semi-static or dynamic.

Step 2: The terminal sequentially executes N layer 3 filters according to the configured parameter.

For example, for a measurement result of the i^{th} measurement period, a number of the i^{th} measurement period is input into the mod (i, N)^{th} layer 3 filters, where i is a positive integer.

In this example, specifically, the layer 1 filter and the layer 3 filter are in a one-to-one correspondence, and both are two. A measurement result of a first measurement period is input into a layer 3 filter 1, a measurement result of a second measurement period is input into a layer 3 filter 2, a measurement result of a third measurement period is input into the layer 3 filter 1, a measurement result of a fourth measurement period is input into the layer 3 filter 2, a measurement result of a fifth measurement period is input into the layer 3 filter 1, and the like.

Step 3: After layer 3 filtering, the terminal selects several strongest beams and reports the several strongest beams to the base station.

For this step, refer to step 3 in Embodiment 1.

The beam quality measurement method according to the embodiments of this application is described above in detail with reference to FIG. 2 to FIG. 5. A beam quality measurement method according to another embodiment of this application is described in detail below with reference to FIG. 6. It can be understood that interaction between a network device and a terminal described on the network device is the same as that described on the terminal side in the method shown in FIG. 2. To avoid repetition, related descriptions are appropriately omitted.

FIG. 6 is a schematic flowchart of a beam quality measurement method according to an embodiment of this application, and may be applied to a network device. As shown in FIG. 6, a method 600 includes the following steps.

S602. A network device sends a reference signal, where the reference signal is separately forwarded by a wireless auxiliary device at different moments through a plurality of beams.

The reference signal is used by a terminal to perform joint processing on reference signals of a same beam of the network device and of a same beam of the wireless auxiliary device to obtain a processing result, where the joint processing includes layer 1 filtering and/or layer 3 filtering.

In this embodiment of this application, a network device sends a reference signal to a wireless auxiliary device, and the wireless auxiliary device forwards the reference signal at different moments through a plurality of beams. A terminal may receive the reference signals forwarded by the wireless auxiliary device, and perform joint processing on reference signals of a same beam of the network device and of a same beam of the wireless auxiliary device to obtain a processing result, to avoid a problem that beam quality measurement accuracy is low because the terminal performs joint processing on reference signals of different beams of the wireless auxiliary device or performs joint processing on reference signals of different beams of the network device, thereby improving beam quality measurement accuracy.

Optionally, in an embodiment, the method further includes: sending configuration information of the reference signal, where the configuration information includes at least one of the following (1) to (4): (1) an identifier or a port number of the reference signal; (2) a time-frequency resource parameter of the reference signal; (3) a time configuration parameter used to perform reference signal measurement behavior, where the time configuration parameter includes: a start time and an end time of a time window of measurement behavior, or a time length of a time window of measurement behavior, a measurement period, and a minimum time interval between measurement behaviors on two adjacent reference signals; and (4) a joint processing criterion of the reference signal, where the joint processing criterion includes a measurement result processing method based on layer 1 filtering and a measurement result processing method based on layer 3 filtering.

Optionally, in an embodiment, the joint processing includes layer 1 filtering, and the configuration information further includes at least one of the following (1) to (3): (1) a quantity of beams of the wireless auxiliary device; an execution time length and an execution period of a beam of the wireless auxiliary device, where the execution period is less than a time length of a time window of measurement behavior; (2) a quantity of to-be-measured beams of the wireless auxiliary device and a beam execution time of the to-be-measured beam; and (3) a beam selection rule of the wireless auxiliary device, where the beam selection rule includes: selecting Y strongest beams from a plurality of measured beams for layer 1 filtering or selecting Y best measurement results after layer 1 filtering and reporting the Y best measurement results to an upper layer, where Y is a positive integer.

Optionally, in an embodiment, the joint processing includes layer 3 filtering, and the configuration information further includes at least one of the following (1) to (3): (1) a quantity of beams of the wireless auxiliary device; (2) an execution time length and an execution period of a beam of the wireless auxiliary device, where the execution period is greater than a time length of a time window of measurement behavior; and (3) a quantity N of to-be-measured beams of the wireless auxiliary device and a corresponding beam execution time.

Optionally, in an embodiment, the reference signal meets at least one of the following (1) and (2): (1) that reference signals appearing within one time window are forwarded by the same beam of the wireless auxiliary device; and (2) that beams of the wireless auxiliary device that are corresponding to time windows with different configuration are different.

Optionally, in an embodiment, the method further includes at least one of the following (1) and (2): (1) receiving a correlation measurement result that is of reference signals of different beams of the wireless auxiliary device and that is measured by a physical layer of the terminal; and (2) receiving a combined reporting result of measurement results of the reference signals of the different beams of the wireless auxiliary device.

Optionally, in an embodiment, the processing result includes beam information of a plurality of beams of the wireless auxiliary device, and the method further includes: receiving the beam information, where the beam information includes identifiers of a plurality of strongest beams.

FIG. 7 is a schematic flowchart of a beam quality measurement method according to an embodiment of this application, and may be applied to a network device. As shown in FIG. 7, a method 700 includes the following steps.

S702. A network device sends configuration information, where the configuration information is used to configure a wireless auxiliary device to forward a reference signal through a same beam within one time window, and the time window is used by a terminal to measure the reference signal.

This embodiment may correspond to solution 2 and Embodiment 2 of the foregoing embodiment.

In this embodiment of this application, a network device sends configuration information, where the configuration information is used to configure a wireless auxiliary device to forward a reference signal through a same beam within one time window. In this way, a terminal may perform joint processing on reference signals of a same beam of the network device and of a same beam of the wireless auxiliary device to obtain a processing result, to avoid a problem that beam quality measurement accuracy is low because the terminal performs joint processing on reference signals of different beams of the wireless auxiliary device or performs joint processing on reference signals of different beams of the network device, thereby improving beam quality measurement accuracy.

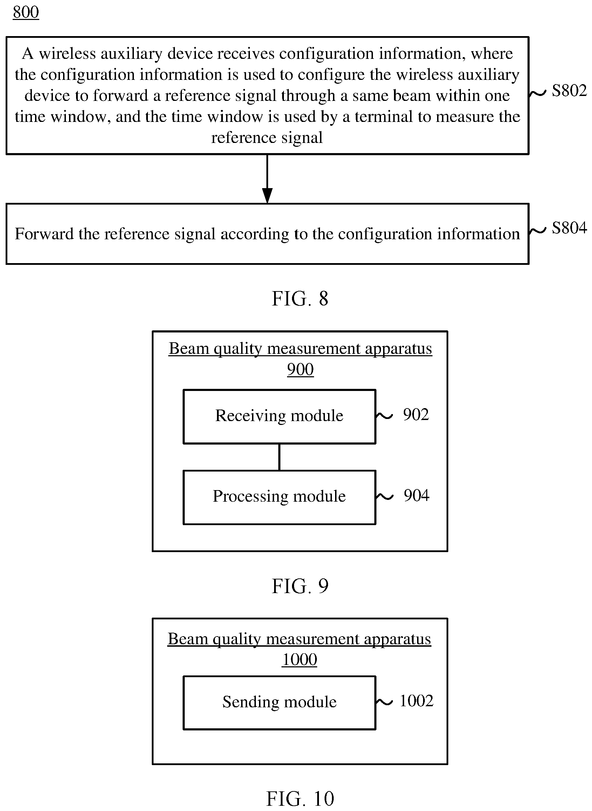

FIG. 8 is a schematic flowchart of a beam quality measurement method according to an embodiment of this application, and may be applied to a wireless auxiliary device. As shown in FIG. 8, a method 800 includes the following steps.

S802. A wireless auxiliary device receives configuration information, where the configuration information is used to configure the wireless auxiliary device to forward a reference signal through a same beam within one time window, and the time window is used by a terminal to measure the reference signal.

S804. Forward the reference signal according to the configuration information.

This embodiment may correspond to solution 2 and Embodiment 2 of the foregoing embodiment.

In this embodiment of this application, a wireless auxiliary device may forward a reference signal through a same beam within one time window based on configuration information. In this way, a terminal may perform joint processing on reference signals of a same beam of a network device and of a same beam of the wireless auxiliary device to obtain a processing result, to avoid a problem that beam quality measurement accuracy is low because the terminal performs joint processing on reference signals of different beams of the wireless auxiliary device or performs joint processing on reference signals of different beams of the network device, thereby improving beam quality measurement accuracy.

It should be noted that, the beam quality measurement method provided in the embodiments of this application may be performed by a beam quality measurement apparatus, or a control module that is in the beam quality measurement apparatus and that is configured to perform the beam quality measurement method. In the embodiments of this application, that the beam quality measurement apparatus performs the beam quality measurement method is used as an example to describe the beam quality measurement apparatus provided in the embodiments of this application.

FIG. 9 is a schematic structural diagram of a beam quality measurement apparatus according to an embodiment of this application. The apparatus may correspond to a terminal in another embodiment. As shown in FIG. 9, an apparatus 900 includes the following modules:
a receiving module 902, configured to receive reference signals forwarded by a wireless auxiliary device, where the reference signals are transmitted by a network device and are separately forwarded by the wireless auxiliary device at different moments through a plurality of beams; and
a processing module 904, configured to perform joint processing on reference signals of a same beam of the network device and of a same beam of the wireless auxiliary device to obtain a processing result, where the joint processing includes layer 1 filtering and/or layer 3 filtering.

In this embodiment of this application, a beam quality measurement apparatus receives reference signals forwarded by a wireless auxiliary device, and performs joint processing on reference signals of a same beam of a network device and of a same beam of the wireless auxiliary device to obtain a processing result, to avoid a problem that beam quality measurement accuracy is low because a terminal performs joint processing on reference signals of different beams of the wireless auxiliary device or performs joint processing on reference signals of different beams of the network device, thereby improving beam quality measurement accuracy.

Optionally, in an embodiment, the receiving module 902 may be further configured to receive configuration information of the reference signal, where the configuration information includes at least one of the following (1) to (4): (1) an identifier or a port number of the reference signal; (2) a time-frequency resource parameter of the reference signal; (3) a time configuration parameter used to perform reference signal measurement behavior, where the time configuration parameter includes: a start time and an end time of a time window of measurement behavior, or a time length of a time window of measurement behavior, a measurement period, and a minimum time interval between measurement behaviors on two adjacent reference signals; and (4) a joint processing criterion of the reference signal, where the joint processing criterion includes a measurement result processing method based on layer 1 filtering and a measurement result processing method based on layer 3 filtering.

Optionally, in an embodiment, the joint processing includes layer 1 filtering, and the configuration information further includes at least one of the following (1) to (4): (1) a quantity of beams of the wireless auxiliary device; (2) an execution time length and an execution period of a beam of the wireless auxiliary device, where the execution period is less than a time length of a time window of measurement behavior; (3) a quantity of to-be-measured beams of the wireless auxiliary device and a beam execution time of the to-be-measured beam; and (4) a beam selection rule of the wireless auxiliary device, where the beam selection rule includes: selecting Y strongest beams from a plurality of measured beams for layer 1 filtering or selecting Y best measurement results after layer 1 filtering and reporting the Y best measurement results to an upper layer, where Y is a positive integer.

Optionally, in an embodiment, the processing module 904 may be configured to input measurement results of the reference signals of the same beam of the network device and of the same beam of the wireless auxiliary device into a layer 1 filter according to the configuration information to obtain the processing result.

Optionally, in an embodiment, the processing module 904 may be further configured to determine times N of parallel layer 1 filtering corresponding to the reference signal according to the quantity of beams of the wireless auxiliary device or the quantity of to-be-measured beams of the wireless auxiliary device.

Optionally, in an embodiment, the processing module 904 may be further configured to select Y results from N parallel layer 1 filtering results according to the beam selection rule and report the Y results to the upper layer.

Optionally, in an embodiment, the processing module 904 may be further configured to: measure correlation between reference signals of different beams of the wireless auxiliary device, and perform at least one of the following: reporting a correlation measurement result to the upper layer; and selecting, according to the correlation measurement result, whether to combine measurement results of the reference signals of the different beams of the wireless auxiliary device and report a combined result to the upper layer.

Optionally, in an embodiment, the joint processing includes layer 3 filtering, and the configuration information further includes at least one of the following (1) to (3): (1) a quantity of beams of the wireless auxiliary device; (2) an execution time length and an execution period of a beam of the wireless auxiliary device, where the execution period is greater than a time length of a time window of measurement behavior; and (3) a quantity of to-be-measured beams of the wireless auxiliary device and a beam execution time of the to-be-measured beam.

Optionally, in an embodiment, the processing module 904 may be further configured to determine times N of parallel layer 3 filtering corresponding to the reference signal according to the quantity of beams of the wireless auxiliary device or the quantity of to-be-measured beams of the wireless auxiliary device.

Optionally, in an embodiment, the reference signal meets at least one of the following (1) and (2): (1) that reference signals appearing within one time window are forwarded by the same beam of the wireless auxiliary device; and (2) that beams of the wireless auxiliary device that are corresponding to time windows with different configuration are different.

Optionally, in an embodiment, the processing module 904 may be configured to input an output result of a layer 1 filter into a corresponding layer 3 filter according to the configuration information to obtain the processing result.

Optionally, in an embodiment, the processing result includes beam information of a plurality of beams of the wireless auxiliary device, and the apparatus includes a sending module, configured to report the beam information, where the beam information includes identifiers of a plurality of strongest beams.

The apparatus 900 according to the embodiments of this application may correspond to the procedures of the method 200 in the embodiments of this application, and the units/modules in the apparatus 900 and the foregoing operations and/or functions are respectively for implementing the corresponding procedures of the method 200 and can achieve a same or equivalent technical effect. For brevity, details are not described herein again.

The beam quality measurement apparatus in this embodiment of this application may be an apparatus, or may be a component, an integrated circuit, or a chip in a terminal. The apparatus may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The beam quality measurement apparatus in this embodiment of this application may be an apparatus with an operating system. The operating system may be an Android (Android) operating system, an iOS operating system, or another possible operating system. This is not specifically limited in the embodiments of this application.

The beam quality measurement apparatus provided in this embodiment of this application can implement the processes implemented in the method embodiment in FIG. 2, and achieve a same technical effect. To avoid repetition, details are not described herein again.

FIG. 10 is a schematic structural diagram of a beam quality measurement apparatus according to an embodiment of this application. The apparatus may correspond to a network device in another embodiment. As shown in FIG. 10, an apparatus 1000 includes the following module:
a sending module 1002, configured to send a reference signal, where the reference signal is separately forwarded by a wireless auxiliary device at different moments through a plurality of beams; and the reference signal is used by a terminal to perform joint processing on reference signals of a same beam of the beam quality measurement apparatus and of a same beam of the wireless auxiliary device to obtain a processing result, where the joint processing includes layer 1 filtering and/or layer 3 filtering.

In this embodiment of this application, a beam quality measurement apparatus sends a reference signal to a wireless auxiliary device, and the wireless auxiliary device forwards the reference signal at different moments through a plurality of beams. A terminal may receive the reference signals forwarded by the wireless auxiliary device, and performs joint processing on reference signals of a same beam of a network device and of a same beam of the wireless auxiliary device to obtain a processing result, to avoid a problem that beam quality measurement accuracy is low because the terminal performs joint processing on reference signals of different beams of the wireless auxiliary device or performs joint processing on reference signals of different beams of the network device, thereby improving beam quality measurement accuracy.

Optionally, in an embodiment, the sending module 1002 may be further configured to send configuration information of the reference signal, where the configuration information includes at least one of the following (1) to (4): (1) an identifier or a port number of the reference signal; (2) a time-frequency resource parameter of the reference signal; (3) a time configuration parameter used to perform reference signal measurement behavior, where the time configuration parameter includes: a start time and an end time of a time window of measurement behavior, or a time length of a time window of measurement behavior, a measurement period, and a minimum time interval between measurement behaviors on two adjacent reference signals; and (4) a joint processing criterion of the reference signal, where the joint processing criterion includes a measurement result processing method based on layer 1 filtering and a measurement result processing method based on layer 3 filtering.

Optionally, in an embodiment, the joint processing includes layer 1 filtering, and the configuration information further includes at least one of the following (1) to (4): (1) a quantity of beams of the wireless auxiliary device; (2) an execution time length and an execution period of a beam of the wireless auxiliary device, where the execution period is less than a time length of a time window of measurement behavior; (3) a quantity of to-be-measured beams of the wireless auxiliary device and a beam execution time of the to-be-measured beam; and (4) a beam selection rule of the wireless auxiliary device, where the beam selection rule includes: selecting Y strongest beams from a plurality of measured beams for layer 1 filtering or selecting Y best measurement results after layer 1 filtering and reporting the Y best measurement results to an upper layer, where Y is a positive integer.

Optionally, in an embodiment, the joint processing includes layer 3 filtering, and the configuration information further includes at least one of the following (1) to (3): (1) a quantity of beams of the wireless auxiliary device; (2) an execution time length and an execution period of a beam of the wireless auxiliary device, where the execution period is greater than a time length of a time window of measurement behavior; and (3) a quantity N of to-be-measured beams of the wireless auxiliary device and a corresponding beam execution time.

Optionally, in an embodiment, the reference signal meets at least one of the following (1) and (2): (1) that reference signals appearing within one time window are forwarded by the same beam of the wireless auxiliary device; and (2) that beams of the wireless auxiliary device that are corresponding to time windows with different configuration are different.

Optionally, in an embodiment, the apparatus further includes a receiving module, configured to perform at least one of the following (1) and (2): (1) receiving a correlation measurement result that is of reference signals of different beams of the wireless auxiliary device and that is measured by a physical layer of the terminal; and (2) receiving a combined reporting result of measurement results of the reference signals of the different beams of the wireless auxiliary device.

Optionally, in an embodiment, the processing result includes beam information of a plurality of beams of the wireless auxiliary device, and the method further includes: receiving the beam information, where the beam information includes identifiers of a plurality of strongest beams.

The apparatus 1000 according to the embodiments of this application may correspond to the procedures of the method 600 in the embodiments of this application, and the units/modules in the apparatus 1000 and the foregoing operations and/or functions are respectively for implementing the corresponding procedures of the method 600 and can achieve a same or equivalent technical effect. For brevity, details are not described herein again.

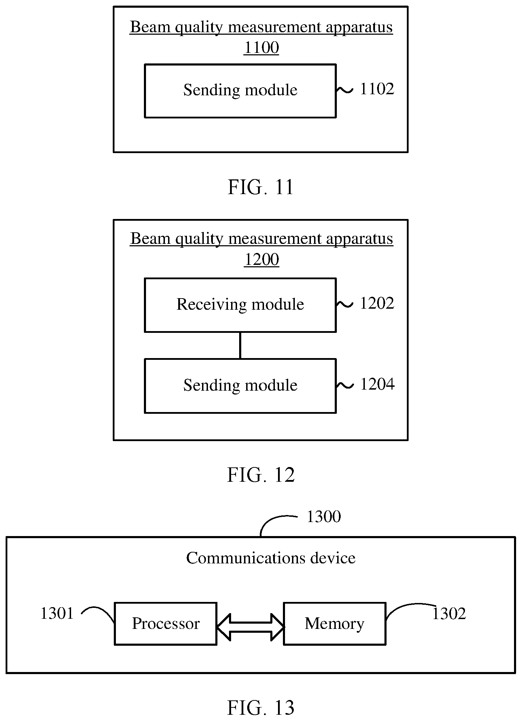

FIG. 11 is a schematic structural diagram of a beam quality measurement apparatus according to an embodiment of this application. The apparatus may correspond to a network device in another embodiment. As shown in FIG. 11, an apparatus 1100 includes the following module:
a sending module 1102, configured to send configuration information, where the configuration information is used to configure a wireless auxiliary device to forward a reference signal through a same beam within one time window, and the time window is used by a terminal to measure the reference signal.

In this embodiment of this application, a beam quality measurement apparatus sends configuration information, where the configuration information is used to configure a wireless auxiliary device to forward a reference signal through a same beam within one time window. In this way, a terminal may perform joint processing on reference signals of a same beam of the beam quality measurement apparatus and of a same beam of the wireless auxiliary device to obtain a processing result, to avoid a problem that beam quality measurement accuracy is low because the terminal performs joint processing on reference signals of different beams of the wireless auxiliary device or performs joint processing on reference signals of different beams of the network device, thereby improving beam quality measurement accuracy.

The apparatus 1100 according to the embodiments of this application may correspond to the procedures of the method 700 in the embodiments of this application, and the units/modules in the apparatus 1100 and the foregoing operations and/or functions are respectively for implementing the corresponding procedures of the method 700 and can achieve a same or equivalent technical effect. For brevity, details are not described herein again.

FIG. 12 is a schematic structural diagram of a beam quality measurement apparatus according to an embodiment of this application. The apparatus may correspond to a wireless auxiliary device in another embodiment. As shown in FIG. 12, an apparatus 1200 includes the following modules:
a receiving module 1202, configured to receive configuration information, where the configuration information is used to configure the beam quality measurement apparatus to forward a reference signal through a same beam within one time window, and the time window is used by a terminal to measure the reference signal; and
a sending module 1204, configured to forward the reference signal according to the configuration information.

In this embodiment of this application, a beam quality measurement apparatus may forward a reference signal through a same beam within one time window based on configuration information. In this way, a terminal may perform joint processing on reference signals of a same beam of a network device and of a same beam of the beam quality measurement apparatus to obtain a processing result, to avoid a problem that beam quality measurement accuracy is low because the terminal performs joint processing on reference signals of different beams of the beam quality measurement apparatus or performs joint processing on reference signals of different beams of the network device, thereby improving beam quality measurement accuracy.

The apparatus 1200 according to the embodiments of this application may correspond to the procedures of the method 800 in the embodiments of this application, and the units/modules in the apparatus 1200 and the foregoing operations and/or functions are respectively for implementing the corresponding procedures of the method 800 and can achieve a same or equivalent technical effect. For brevity, details are not described herein again.

Optionally, as shown in FIG. 13, an embodiment of this application further provides a communications device 1300, including a processor 1301, a memory 1302, and a program or an instruction stored in the memory 1302 and executable on the processor 1301. For example, when the communications device 1300 is a terminal, when the program or the instruction is executed by the processor 1301, the processes of the foregoing beam quality measurement method are implemented and a same technical effect can be achieved. When the communications device 1300 is a wireless auxiliary device, when the program or the instruction is executed by the processor 1301, the processes of the foregoing beam quality measurement method embodiment are implemented and a same technical effect can be achieved. When the communications device 1300 is a network device, when the program or the instruction is executed by the processor 1301, the processes of the foregoing beam quality measurement method embodiment are implemented and a same technical effect can be achieved. To avoid repetition, details are not described herein again.

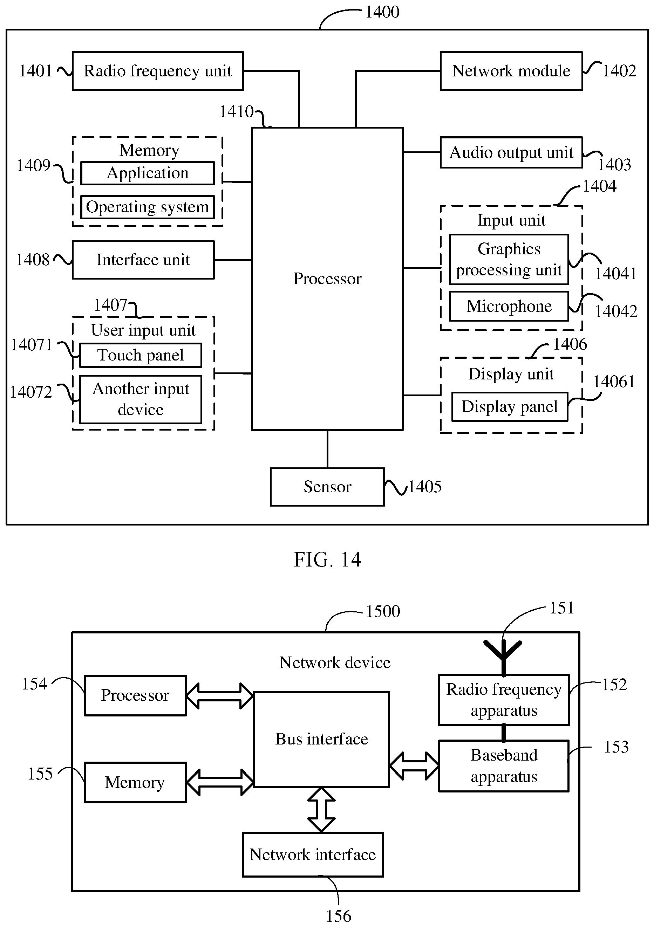

FIG. 14 is a schematic structural diagram of hardware of a terminal according to an embodiment of this application.

A terminal 1400 includes but is not limited to components such as a radio frequency unit 1401, a network module 1402, an audio output unit 1403, an input unit 1404, a sensor 1405, a display unit 1406, a user input unit 1407, an interface unit 1408, a memory 1409, and a processor 1410.

A person skilled in the art can understand that the terminal 1400 may further include a power supply (such as a battery) that supplies power to each component. The power supply may be logically connected to the processor 1410 by using a power supply management system, to implement functions such as charging and discharging management, and power consumption management by using the power supply management system. The terminal structure shown in FIG. 14 constitutes no limitation on the terminal, and the terminal may include more or fewer components than those shown in the figure, or combine some components, or have different component arrangements. Details are not described herein.

It should be understood that, in this embodiment of this application, the input unit 1404 may include a graphics processing unit (Graphics Processing Unit, GPU) 14041 and a microphone 14042, and the graphics processing unit 14041 processes image data of a still picture or a video obtained by an image capture apparatus (such as a camera) in a video capture mode or an image capture mode. The display unit 1406 may include a display panel 14061. Optionally, the display panel 14061 may be configured in a form such as a liquid crystal display or an organic light-emitting diode. The user input unit 1407 includes a touch panel 14071 and another input device 14072. The touch panel 14071 is also referred to as a touchscreen. The touch panel 14071 may include two parts: a touch detection apparatus and a touch controller. The another input device 14072 may include but is not limited to a physical keyboard, a functional button (such as a volume control button or a power on/off button), a trackball, a mouse, and a joystick. Details are not described herein.

In this embodiment of this application, the radio frequency unit 1401 receives downlink data from a network device and then sends the downlink data to the processor 1410 for processing; and sends uplink data to the network device. Usually, the radio frequency unit 1401 includes but is not limited to an antenna, at least one amplifier, a transceiver, a coupler, a low noise amplifier, a duplexer, and the like.

The memory 1409 may be configured to store a software program or an instruction and various data. The memory 1409 may mainly include a program or instruction storage area and a data storage area. The program or instruction storage area may store an operating system, and an application or an instruction required by at least one function (for example, a sound playing function or an image playing function). In addition, the memory 1409 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1410 may include one or more processing units. Optionally, an application processor and a modem processor may be integrated into the processor 1410. The application processor mainly processes an operating system, a user interface, an application, an instruction, or the like. The modem processor mainly processes wireless communications, for example, a baseband processor. It can be understood that, alternatively, the modem processor may not be integrated into the processor 1410.

The radio frequency unit 1401 is configured to receive reference signals forwarded by a wireless auxiliary device, where the reference signal are transmitted by a network device and are separately forwarded by the wireless auxiliary device at different moments through a plurality of beams; and the processor 1410 is configured to perform joint processing on reference signals of a same beam of the network device and of a same beam of the wireless auxiliary device to obtain a processing result, where the joint processing includes layer 1 filtering and/or layer 3 filtering.

In this embodiment of this application, a terminal receives reference signals forwarded by a wireless auxiliary device, and performs joint processing on reference signals of a same beam of a network device and of a same beam of the wireless auxiliary device to obtain a processing result, to avoid a problem that beam quality measurement accuracy is low because the terminal performs joint processing on reference signals of different beams of the wireless auxiliary device or performs joint processing on reference signals of different beams of the network device, thereby improving beam quality measurement accuracy.

The terminal 1400 provided in this embodiment of this application can implement the processes of the forgoing beam quality measurement method embodiment, and achieve a same technical effect. To avoid repetition, details are not described herein again.

Specifically, an embodiment of this application further provides a network device. As shown in FIG. 15, a network device 1500 includes an antenna 151, a radio frequency apparatus 152, and a baseband apparatus 153. The antenna 151 is connected to the radio frequency apparatus 152. In an uplink direction, the radio frequency apparatus 152 receives information by using the antenna 151, and sends the received information to the baseband apparatus 153 for processing. In a downlink direction, the baseband apparatus 153 processes information that needs to be sent, and sends processed information to the radio frequency apparatus 152. The radio frequency apparatus 152 processes the received information, and sends processed information by using the antenna 151.

The frequency band processing apparatus may be located in the baseband apparatus 153. The method performed by the network device in the foregoing embodiment may be implemented in the baseband apparatus 153. The baseband apparatus 153 includes a processor 154 and a memory 155.

The baseband apparatus 153 may include, for example, at least one baseband board, where a plurality of chips are disposed on the baseband board. As shown in FIG. 15, one chip is, for example, the processor 154, which is connected to the memory 155, so as to invoke a program in the memory 155 to perform operations of the network device shown in the foregoing method embodiment.

The baseband apparatus 153 may further include a network interface 156, configured to exchange information with the radio frequency apparatus 152. For example, the interface is a common public radio interface (common public radio interface, CPRI for short).

Specifically, the network device in this embodiment of the present invention further includes an instruction or a program stored in the memory 155 and executable on the processor 154. The processor 154 invokes the instruction or the program in the memory 155 to perform the method performed by the modules shown in FIG. 10 or FIG. 11 or FIG. 12, and a same technical effect is achieved. To avoid repetition, details are not described herein again.

An embodiment of this application further provides a readable storage medium. The readable storage medium stores a program or an instruction, and when the program or the instruction is executed by a processor, the processes of the foregoing beam quality measurement method embodiment are implemented and a same technical effect can be achieved. To avoid repetition, details are not described herein again.

The processor may be a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to execute a program or an instruction to implement the processes of the foregoing beam quality measurement method embodiment and a same technical effect can be achieved. To avoid repetition, details are not described herein again.

It should be understood that the chip in this embodiment of this application may also be referred to as a system-level chip, a system chip, a chip system, or an on-chip system chip.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "including a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A beam quality measurement method, wherein the method comprises:
receiving, by a terminal, reference signals forwarded by a wireless auxiliary device, wherein the reference signals are transmitted by a network device and are separately forwarded by the wireless auxiliary device at different moments through a plurality of beams; and
performing joint processing on reference signals of a same beam of the network device and of a same beam of the wireless auxiliary device to obtain a processing result, wherein the joint processing comprises layer 1 filtering and/or layer 3 filtering.

2. The method according to claim 1, wherein the method further comprises: receiving configuration information of a reference signal, wherein the configuration information comprises at least one of the following:
an identifier or a port number of the reference signal;
a time-frequency resource parameter of the reference signal;
a time configuration parameter used to perform reference signal measurement behavior, wherein the time configuration parameter comprises: a start time and an end time of a time window of measurement behavior, or a time length of a time window of measurement behavior, a measurement period, and a minimum time interval between measurement behaviors on two adjacent reference signals; and
a joint processing criterion of the reference signal, wherein the joint processing criterion comprises a measurement result processing method based on layer 1 filtering and a measurement result processing method based on layer 3 filtering.

3. The method according to claim 2, wherein the joint processing comprises layer 1 filtering, and the configuration information further comprises at least one of the following:
a quantity of beams of the wireless auxiliary device;
an execution time length and an execution period of a beam of the wireless auxiliary device, wherein the execution period is less than a time length of a time window of measurement behavior;
a quantity of to-be-measured beams of the wireless auxiliary device and a beam execution time of the to-be-measured beam; and
a beam selection rule of the wireless auxiliary device, wherein the beam selection rule comprises: selecting Y strongest beams from a plurality of measured beams for layer 1 filtering or selecting Y best measurement results after layer 1 filtering and reporting the Y best measurement results to an upper layer, wherein Y is a positive integer.

4. The method according to claim 3, wherein the performing joint processing on reference signals of a same beam of the network device and of a same beam of the wireless auxiliary device to obtain a processing result comprises:
inputting measurement results of the reference signals of the same beam of the network device and of the same beam of the wireless auxiliary device into a layer 1 filter according to the configuration information to obtain the processing result.

5. The method according to claim 3 or 4, wherein the method further comprises:
determining, by the terminal, times N of parallel layer 1 filtering corresponding to the reference signal according to the quantity of beams of the wireless auxiliary device or the quantity of to-be-measured beams of the wireless auxiliary device.

6. The method according to claim 3 or 4, wherein the method further comprises:
selecting, by the terminal, Y results from N parallel layer 1 filtering results according to the beam selection rule and reporting the Y results to the upper layer.

7. The method according to claim 3, wherein the method further comprises:
measuring, by a physical layer of the terminal, correlation between reference signals of different beams of the wireless auxiliary device, and performing at least one of the following:
reporting a correlation measurement result to the upper layer; and
selecting, according to the correlation measurement result, whether to combine measurement results of the reference signals of the different beams of the wireless auxiliary device and report a combined result to the upper layer.

8. The method according to claim 2, wherein the joint processing comprises layer 3 filtering, and the configuration information further comprises at least one of the following:
a quantity of beams of the wireless auxiliary device;
an execution time length and an execution period of a beam of the wireless auxiliary device, wherein the execution period is greater than a time length of a time window of measurement behavior; and
a quantity of to-be-measured beams of the wireless auxiliary device and a beam execution time of the to-be-measured beam.

9. The method according to claim 8, wherein the method further comprises:
determining, by the terminal, times N of parallel layer 3 filtering corresponding to the reference signal according to the quantity of beams of the wireless auxiliary device or the quantity of to-be-measured beams of the wireless auxiliary device.

10. The method according to claim 8, wherein the reference signal meets at least one of the following:
that reference signals appearing within one time window are forwarded by the same beam of the wireless auxiliary device; and
that beams of the wireless auxiliary device that are corresponding to time windows with different configuration are different.

11. The method according to claim 8, wherein the performing joint processing on reference signals of a same beam of the network device and of a same beam of the wireless auxiliary device to obtain a processing result comprises:
inputting an output result of a layer 1 filter into a corresponding layer 3 filter according to the configuration information to obtain the processing result.

12. The method according to claim 1, wherein the processing result comprises beam information of a plurality of beams of the wireless auxiliary device, and the method further comprises:
reporting the beam information, wherein the beam information comprises identifiers of a plurality of strongest beams.

13. A beam quality measurement method, wherein the method comprises:
sending, by a network device, a reference signal, wherein
the reference signal is separately forwarded by a wireless auxiliary device at different moments through a plurality of beams; and
the reference signal is used by a terminal to perform joint processing on reference signals of a same beam of the network device and of a same beam of the wireless auxiliary device to obtain a processing result, wherein the joint processing comprises layer 1 filtering and/or layer 3 filtering.

14. The method according to claim 13, wherein the method further comprises: sending configuration information of a reference signal, wherein the configuration information comprises at least one of the following:
an identifier or a port number of the reference signal;
a time-frequency resource parameter of the reference signal;
a time configuration parameter used to perform reference signal measurement behavior, wherein the time configuration parameter comprises: a start time and an end time of a time window of measurement behavior, or a time length of a time window of measurement behavior, a measurement period, and a minimum time interval between measurement behaviors on two adjacent reference signals; and
a joint processing criterion of the reference signal, wherein the joint processing criterion comprises a measurement result processing method based on layer 1 filtering and a measurement result processing method based on layer 3 filtering.

15. The method according to claim 14, wherein the joint processing comprises layer 1 filtering, and the configuration information further comprises at least one of the following:
a quantity of beams of the wireless auxiliary device;
an execution time length and an execution period of a beam of the wireless auxiliary device, wherein the execution period is less than a time length of a time window of measurement behavior;
a quantity of to-be-measured beams of the wireless auxiliary device and a beam execution time of the to-be-measured beam; and
a beam selection rule of the wireless auxiliary device, wherein the beam selection rule comprises: selecting Y strongest beams from a plurality of measured beams for layer 1 filtering or selecting Y best measurement results after layer 1 filtering and reporting the Y best measurement results to an upper layer, wherein Y is a positive integer.

16. The method according to claim 14, wherein the joint processing comprises layer 3 filtering, and the configuration information further comprises at least one of the following:
a quantity of beams of the wireless auxiliary device;
an execution time length and an execution period of a beam of the wireless auxiliary device, wherein the execution period is greater than a time length of a time window of measurement behavior; and
a quantity N of to-be-measured beams of the wireless auxiliary device and a corresponding beam execution time.

17. The method according to claim 16, wherein the reference signal meets at least one of the following:
that reference signals appearing within one time window are forwarded by the same beam of the wireless auxiliary device; and
that beams of the wireless auxiliary device that are corresponding to time windows with different configuration are different.

18. The method according to claim 13, wherein the method further comprises at least one of the following:
receiving a correlation measurement result that is of reference signals of different beams of the wireless auxiliary device and that is measured by a physical layer of the terminal; and
receiving a combined reporting result of measurement results of the reference signals of the different beams of the wireless auxiliary device.

19. The method according to claim 13, wherein the processing result comprises beam information of a plurality of beams of the wireless auxiliary device, and the method further comprises:
receiving the beam information, wherein the beam information comprises identifiers of a plurality of strongest beams.

20. A beam quality measurement method, wherein the method comprises:
sending, by a network device, configuration information, wherein the configuration information is used to configure a wireless auxiliary device to forward a reference signal through a same beam within one time window, and the time window is used by a terminal to measure the reference signal.

21. A beam quality measurement method, wherein the method comprises:
receiving, by a wireless auxiliary device, configuration information, wherein the configuration information is used to configure the wireless auxiliary device to forward a reference signal through a same beam within one time window, and the time window is used by a terminal to measure the reference signal; and
forwarding the reference signal according to the configuration information.

22. A beam quality measurement apparatus, comprising:
a receiving module, configured to receive reference signals forwarded by a wireless auxiliary device, wherein the reference signals are transmitted by a network device and are separately forwarded by the wireless auxiliary device at different moments through a plurality of beams; and
a processing module, configured to perform joint processing on reference signals of a same beam of the network device and of a same beam of the wireless auxiliary device to obtain a processing result, wherein the joint processing comprises layer 1 filtering and/or layer 3 filtering.

23. A beam quality measurement apparatus, comprising:
a sending module, configured to send a reference signal, wherein
the reference signal is separately forwarded by a wireless auxiliary device at different moments through a plurality of beams; and
the reference signal is used by a terminal to perform joint processing on reference signals of a same beam of the beam quality measurement apparatus and of a same beam of the wireless auxiliary device to obtain a processing result, wherein the joint processing comprises layer 1 filtering and/or layer 3 filtering.

24. A beam quality measurement apparatus, comprising:
a sending module, configured to send configuration information, wherein the configuration information is used to configure a wireless auxiliary device to forward a reference signal through a same beam within one time window, and the time window is used by a terminal to measure the reference signal.

25. Abeam quality measurement apparatus, comprising:
a receiving module, configured to receive configuration information, wherein the configuration information is used to configure the beam quality measurement apparatus to forward a reference signal through a same beam within one time window, and the time window is used by a terminal to measure the reference signal; and
a sending module, configured to forward the reference signal according to the configuration information.

26. A terminal, comprising a processor, a memory, and a program or an instruction stored in the memory and executable on the processor, wherein when the program or the instruction is executed by the processor, the beam quality measurement method according to any one of claims 1 to 12 is implemented.

27. A network device, comprising a processor, a memory, and a program or an instruction stored in the memory and executable on the processor, wherein when the program or the instruction is executed by the processor, the beam quality measurement method according to any one of claims 13 to 20 is implemented.

28. A wireless auxiliary device, comprising a processor, a memory, and a program or an instruction stored in the memory and executable on the processor, wherein when the program or the instruction is executed by the processor, the beam quality measurement method according to claim 21 is implemented.

29. A readable storage medium, wherein the readable storage medium stores a program or an instruction, and when the program or the instruction is executed by a processor, the beam quality measurement method according to any one of claims 1 to 21 is implemented.
